(19) Europäisches Patentamt

European Patent Office

Office européen des brevets

(11) **EP 1 168 133 B1**

(12) **FASCICULE DE BREVET EUROPEEN**

(45) Date de publication et mention
de la délivrance du brevet:
**09.11.2005 Bulletin 2005/45**

(51) Int Cl.⁷: **G05D 15/01**, G05D 3/12

(21) Numéro de dépôt: **01401591.1**

(22) Date de dépôt: **18.06.2001**

(54) **Perfectionnements aux dispositifs de servo-commande, notamment pour actionneur de commande de vol d'aéronef**

Servosteuerung, insbesondere für den Flugsteuerstellantrieb eines Flugzeugs

Servo-control, especially for aircraft flight control actuator

(84) Etats contractants désignés:
**DE ES FR GB IT**

(30) Priorité: **19.06.2000 FR 0007795**

(43) Date de publication de la demande:
**02.01.2002 Bulletin 2002/01**

(73) Titulaire: **Goodrich Actuation Systems SAS
78530 Buc (FR)**

(72) Inventeur: **Silvestro, Geneviève
95610 Eragny (FR)**

(74) Mandataire: **Callon de Lamarck, Jean-Robert et al
Cabinet Régimbeau
20, rue de Chazelles
75847 Paris cedex 17 (FR)**

(56) Documents cités:
**EP-A- 0 897 111          FR-A- 2 660 705
US-A- 5 117 170          US-A- 5 136 227**

**Description**

La présente invention est relative aux dispositifs de servocommande, notamment pour actionneur de commande de vol d'aéronef.

Elle trouve préférentiellement application pour des dispositifs de servo-commande de position.

Elle peut également avantageusement trouver application pour des dispositifs de servo-commande d'efforts.

Classiquement, un dispositif de servocommande de position pour actionneur de commande de vol comporte une boucle d'asservissement qui intègre des moyens de compensation qui sont disposés dans la boucle en amont du système servo-commandé et qui assurent un filtrage notamment aux fréquences de résonance des mouvements de la ou des pièces mécaniques actionnées par ledit système.

Un problème rencontré avec un tel dispositif de servocommande tient en ce qu'il ne prend pas en compte les efforts qui s'exercent sur les pièces mécaniques actionnées.

Or, ces efforts peuvent être particulièrement importants.

Dans divers domaines techniques, notamment dans des domaines très éloignés des actionneurs de commande de vol d'aéronef, on a proposé différents système d'asservissement permettant d'améliorer le contrôle de l'effort exercé sur les pièces mécaniques actionnées.

Le document EP 0 897 111 propose une machine d'essais mécaniques comprenant un dispositif d'asservissement permettant de contrôler une charge exercée sur un échantillon de matériau à tester. Le dispositif d'asservissement comprend des moyens pour déterminer une erreur caractéristique de la différence entre l'effort théorique de consigne et une variable dépendante des efforts réels maximal et minimal appliqués.

Le document US 5 117 170 décrit une machine d'exercice comprenant un dispositif motorisé asservi permettant de simuler une charge. Dans ce dispositif, le signal de commande du moteur dépend de la position du rotor et ne peut dépasser une valeur maximale.

Le document US 5 136 227 propose un dispositif asservi permettant de compenser l'effet de la gravité sur la bras d'un robot. Ce dispositif comprend des moyens pour déterminer une erreur caractéristique de la différence entre le couple réel appliqué et un couple théorique du à la gravité.

Le document FR 2 660 705 décrit un dispositif d'asservissement de l'effort exercé sur le piston d'un vérin hydraulique. Ce dispositif comprend une boucle d'asservissement prenant en compte une erreur caractéristique de la différence entre l'effort réel appliqué et un effort de consigne, et une boucle supplémentaire prenant en compte la vitesse du piston.

Ces différents dispositifs ne permettent pas de prendre en compte la résistance des pièces mécaniques sur lesquelles s'exercent les efforts.

On souhaite par conséquent, pour limiter la fatigue des pièces mécaniques et accroître leur temps de vie, pouvoir mieux contrôler ces efforts.

Un but de l'invention est de proposer un dispositif de servocommande de position en ce sens qui soit particulièrement simple et fiable.

A cet effet, l'invention propose un dispositif de servocommande comportant au moins une boucle d'asservissement qui reçoit en entrée un signal de contrôle d'asservissement et dont la sortie agit sur un élément à asservir, ce dispositif comportant des moyens pour déterminer un paramètre caractérisant l'effort réel généré par l'asservissement, caractérisé en ce qu'il comporte également une boucle incluant des moyens pour déterminer une erreur caractéristique de la différence entre ce paramètre caractérisant l'effort réel et un paramètre caractérisant un effort théorique admissible fonction du signal de contrôle d'asservissement, ainsi que des moyens pour corriger le traitement de la boucle d'asservissement en fonction de cette erreur.

Un tel dispositif, qui peut être un dispositif de servocommande de position, comme un dispositif de servo-commande d'effort, présente l'avantage de permettre un contrôle d'effort très performant.

Ce dispositif est avantageusement complété par les différentes caractéristiques suivantes prises seules ou selon toutes leurs combinaisons techniquement possibles :

- les moyens pour déterminer l'erreur comportent des moyens de détermination d'un paramètre caractérisant l'effort théorique admissible à partir d'un modèle de référence ;
- un actionneur commandé par la boucle d'asservissement étant de type hydraulique, le modèle de référence est une fonction de transfert Force/signal de commande de débit ;
- les moyens de détermination comportent des moyens pour mettre en oeuvre une fonction de transfert ayant la même allure qu'une fonction de transfert de détermination du paramètre caractérisant l'effort réel, sauf au voisinage d'au moins une fréquence de résonance dudit effort ;
- ladite fonction de transfert est

$$\frac{F_{ref}}{Q_{ref}} = \frac{ks}{\left(\frac{1}{2\pi f_0}\right)^2 s^2 + 2x\,\frac{\chi}{2\pi f_0}\,s + 1}\;B(s)$$

où s représente le laplacien et où f0 est égal à ou est au voisinage d'une fréquence de résonance, $\chi$ étant un facteur d'atténuation d'un ordre de grandeur entre 0,7 et 1, k étant un facteur de gain, B(s) étant une fonction de filtrage.

- la fonction B(s) est égale à 1.

L'invention concerne également avantageusement un dispositif de servocommande hydraulique, caractérisé en ce qu'il est constitué par un dispositif du type précité.

Elle concerne également un dispositif de servocommande pour actionneur de commande de vol ou vérin de test, caractérisé en ce qu'il est constitué par un dispositif du type précité.

D'autres caractéristiques et avantages de l'invention ressortiront encore de la description qui suit, laquelle est purement illustrative et non limitative et qui doit être lue en regard des dessins annexés sur lesquels :

- la figure 1 est une représentation schématique illustrant un dispositif conforme à un mode de réalisation possible de l'invention ;
- la figure 2 est une représentation schématique d'un vérin ou actionneur de servocommande hydraulique ;
- les figures 3a à 3c sont trois graphes illustrant différentes fonctions de transfert susceptibles d'être utilisées avec un dispositif du type de celui de la figure 1.

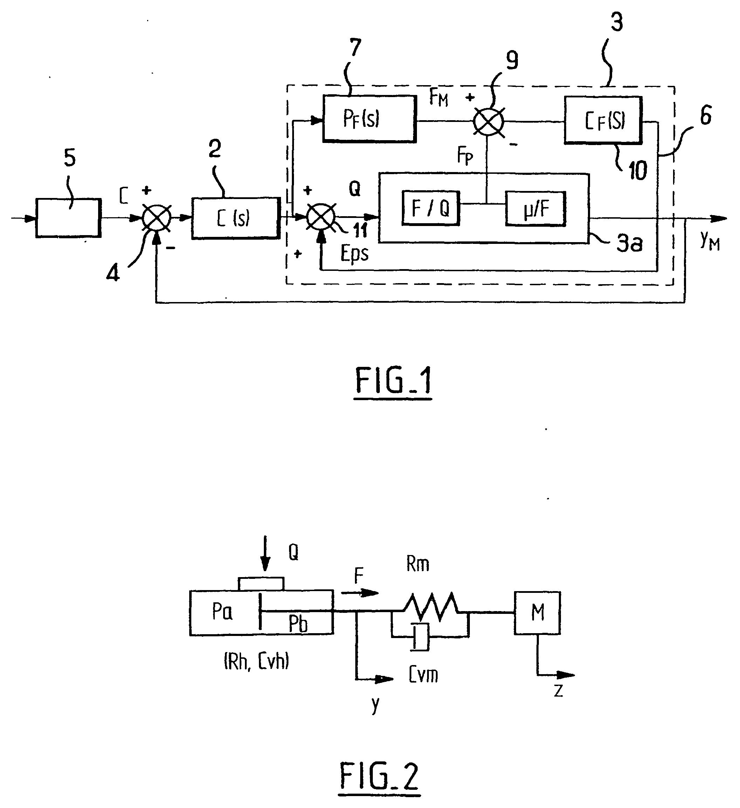

Le dispositif représenté sur la figure 1 comporte une boucle d'asservissement 1 qui comprend un système servo-commandé 3, ainsi que des moyens de compensation 2 qui sont disposés dans la boucle en amont de ce système servo-commandé 3.

Les moyens de soustraction qui en entrée de la boucle reçoivent un signal de commande C et lui soustraient le signal "$y_M$" en sortie de la boucle, pour générer un signal d'erreur, ont été référencés par 4. (Le signal "$y_M$" est un signal caractérisant la position ou l'effort commandé, tandis que le signal C est un signal de même nature caractérisant la consigne de position ou d'effort).

On a également représenté sur cette figure 1 un filtre 5 qui reçoit en entrée un signal de commande non filtré et qui fournit en sortie le signal C.

Les moyens de compensation 2 reçoivent le signal d'erreur en sortie des moyens de soustraction 4 et mettent en oeuvre sur celui-ci un filtrage entre autres à des fréquences qui sont des fréquences de résonance pour les mouvements des pièces mécaniques commandées par l'actionneur (fonction de transfert C(s)).

Outre un actionneur 3a qui agit mécaniquement sur la ou les pièces que l'on veut commander (vérin hydraulique de commande de vol ou de banc de test, par exemple), le système servo-commandé 3 comporte une boucle 6 qui calcule la différence entre d'une part un effort réel $F_p$ correspondant au signal $y_M$ en sortie de la boucle 3 et d'autre part un effort $F_M$ autorisé déterminé en fonction du signal Cr en sortie des moyens de compensation 2.

Sur la figure 1, le module de détermination de l'effort $F_M$ autorisé a été référencé par 7.

Il met en oeuvre une fonction de transfert $P_F(s)$ qui est une modélisation du comportement en effort attendu, sous la forme par exemple d'une représentation linéaire de Laplace.

Cette modélisation est choisie pour sensiblement correspondre au comportement réel en effort de la servocommande en absence de la boucle 6, sensiblement modifiée pour éviter ou limiter les résonances mécaniques en effort.

Sur la figure 1, les moyens de soustraction de la boucle 6 ont été référencés par 9. Le signal en sortie de ces moyens de soustraction 9 fait le cas échéant l'objet d'un traitement de compensation (module 10 dont la fonction de transfert $C_F(S)$ peut par exemple être une simple fonction de gain), le signal $EPS_f$ de correction en sortie de ce traitement étant additionné au signal Cr (moyens 11).

Le signal Q corrigé ainsi obtenu (dans le cas d'une servocommande hydraulique, Q est un signal de commande de débit) est injecté en entrée de l'actionneur 3a.

L'effort réel $F_P$ peut être quant à lui déterminé par un capteur de pression prévu à cet effet.

En variante, ainsi que l'illustre la figure 1, l'actionneur 3a peut se décomposer en deux modules mettant en oeuvre deux fonctions de transfert successives F/Q, puis Y/F, le signal caractéristique de la force réelle Fp étant celui en sortie du module correspondant à la première fonction de transfert F/Q.

La boucle 6 ainsi réalisée permet de stabiliser le comportement en effort généré par la servocommande.

Elle permet également de rendre celle-ci plus performante.

On va maintenant décrire dans la suite du texte des exemples de fonctions de transfert possibles dans le cas d'un asservissement de position, notamment pour $P_F(s)$, F/Q et Y/F.

Un vérin ou une servocommande peut se schématiser ainsi que l'illustre la figure 2, par une raideur hydraulique Rh, un coefficient d'amortissement hydraulique Cvh, une surface S, un débit Q (par exemple commandé au moyen d'une entrée électrique), des pressions Pa et Pb dans l'une et l'autre des deux chambres hydrauliques, l'ensemble étant chargé par une masse M, par l'intermédiaire d'une raideur Rm et d'un coefficient d'amortissement mécanique Cvm,.

L'équation de Laplace sur la charge s'écrit alors :

$$mzs^2 = (R_m + C_{vm}s)(y - z) = F \tag{1}$$

le Laplacien étant noté s, le déplacement de la tige du vérin étant noté y, celui de la masse M étant noté z, l'effort généré par le vérin étant noté F.

Les équations qui régissent l'expression des pressions dans les chambres d'un vérin symétrique rempli de fluide sont en elles-mêmes connues (voir par exemple « Commande et asservissement hydraulique et électrohydrauliques » de Marcel Guillon, Editions Tec&Doc 1992).

Notamment, l'équation en Laplace qui relie le débit, l'effort et le déplacement s'écrit :

$$\frac{Q}{S}\left(1 + \frac{C_{vh}}{R_h}s\right) = s\left(y + \frac{C_{vh}}{R_h}sy + \frac{1}{R_h}F\right) \tag{2}$$

ou encore

$$F = (R_h + C_{vh}s)\left(\frac{Q}{Ss} - y\right) \tag{3}$$

La compilation de ces trois équations donne :

$$y = F.\frac{R_m + C_{vm}s + Ms^2}{(R_m + C_{vm}s)Ms^2} \tag{4}$$

L'équation [2] peut alors s'exprimer en fonction de [4] par :

$$\frac{F}{Q} = \frac{R_h + C_{vn}s}{Ss\left(1 + \frac{R_m + C_{vm}s + Ms^2}{R_{m+C_{vn}}s)Ms^2} - (R_h + C_{vh}s)\right)} \tag{5}$$

$$\frac{F}{Q} = \frac{(R_h + C_{vh}s)(R_m + C_{vm}s)Ms^2}{Ss(C_{vh} + C_{vm})Ms^3 + (M(R_h + R_m) + (C_{vh}C_{vm})s^2 + (R_hC_{vm} + R_m(C_{vh})s + R_hR_m)} \tag{6}$$

$$\frac{F}{Q} = \frac{Ms(R_hR_m + (R_hC_{vm} + R_mC_{vh})s + C_{vh}C_{vm}s^2)}{S(R_hR_m + (R_hC_{vm} + R_mC_{vh})s + (C_{vh}C_{vm} + M(R_m + R_h))s^2 + M(C_{vh} + C_{vm})s^3)} \tag{7}$$

Le transfert en position ou effort y/Q peut donc se décomposer en une première fonction de transfert F/Q donnée en [7] suivie d'une seconde équation y/F dont le transfert est donné par [4], l'asservissement de position se faisant sur le système complet en y/Q.

On notera que l'expression de F/Q met en évidence un terme en dérivée au numérateur, et une résonance donnée par les termes prépondérants au dénominateur de fréquence

$$\frac{1}{2\pi}\sqrt{\frac{R_h R_m}{M(R_h+R_m)}}.$$

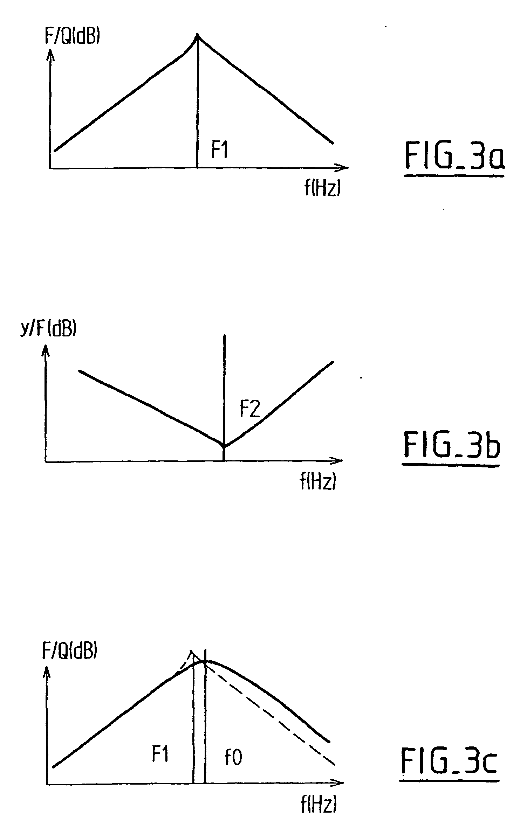

L'allure de F/Q, vérifiée pratiquement, est donc de la forme représentée sur la figure 3a.

La résonance se traduit par conséquent par des pics d'effort très importants notamment sur tous les changements de signe de la commande.

Le transfert en position y/F présente quant à lui, ainsi que l'illustre la figure 3b, une chute de gain à la fréquence F2 donnée principalement par

$$\frac{1}{2\pi}\sqrt{\frac{R_m}{M}}$$

et ne présente aucun problème de contrôle particulier. Le rapport entre les fréquences F1 et F2 est

$$\sqrt{\frac{R_h}{R_h+R_m}}$$

et F1 est toujours inférieure à F2.

Une modélisation utilisée dans la boucle 6 de contrôle d'effort peut se déduire de la connaissance de la fonction de transfert linéaire F/Q.

La fonction de transfert $P_F(s)$ correspondant à cette modélisation peut être choisie de façon à correspondre à F/Q aux très basses fréquences et à gommer au mieux la résonance autour de F1.

Notamment, en utilisant pour la fonction de transfert $P_F(s)$ la même allure que la fonction de transfert F/Q théorique sauf au voisinage de F1, on obtient des résultats très robustes en diminuant sensiblement l'effort de la servocommande ou du vérin aux transitions.

Un exemple de fonction de transfert pour cette modélisation de référence peut être le suivant :

$$\frac{F_{ref}}{Q_{ref}} = \frac{ks}{\left(\frac{1}{2\pi f_0}\right)^2 s^2 + 2x\,\frac{\chi}{2\pi f_0}\,s + 1}\;B(s)$$

Cette fonction de transfert, représentée sur la figure 3c avec en superposition la fonction de transfert de la figure 3a (en pointillés) a été obtenue par la connaissance a priori de la structure de F/Q, à savoir un terme dérivé pur au numérateur, et un second ordre de pulsation propre f0 (qui n'est pas forcément rigoureusement égale à F1 (par exemple, une erreur de 20% par rapport à F1 est totalement admissible, avec un facteur d'amortissement $\chi$ qui est par exemple d'un ordre de grandeur compris entre 0.7 et 1 et qui gomme la surtension). Dans l'équation ci-dessus, B(s) représente un terme de filtrage qui dans une forme simplifiée peut être pris égal à 1 ; k est un terme de gain qui correspond à la fonction de transfert $C_F(s)$.

Bien entendu, d'autres types de modèles de référence peuvent être utilisés. Toutefois, ceux qui viennent d'être décrits présentent l'avantage d'être efficaces, simples d'emploi, et robustes.

On notera en outre que le modèle de référence présenté ci-dessus peut également avantageusement être utilisé dans le cas d'un asservissement en effort.

Egalement, on notera que les dispositifs proposés par l'invention peuvent avantageusement être utilisés dans des dispositifs de servocommande comportant plusieurs boucles d'asservissement en parallèle.

En particulier, l'invention s'implémente facilement sur des dispositifs de servocommande classiquement connus, dont les différentes boucles d'asservissement sont synchronisées au moyen de mesures d'effort.

On notera également qu'un des avantages importants de l'invention tient en ce qu'elle permet un fonctionnement de la boucle d'asservissement principale (boucle 1 sur la figure 1), même si la boucle de correction destinée à prendre en compte l'effort (boucle 6 sur la figure 1) défaille.

**Revendications**

1.  Dispositif de servocommande comportant au moins une boucle d'asservissement qui reçoit en entrée un signal de contrôle d'asservissement et dont la sortie agit sur un élément à asservir, ce dispositif comportant des moyens pour déterminer un paramètre caractérisant l'effort réel généré par l'asservissement, **caractérisé en ce qu'**il comporte également une boucle incluant des moyens pour déterminer une erreur caractéristique de la différence entre ce paramètre caractérisant l'effort réel et un paramètre caractérisant un effort théorique admissible fonction du signal de contrôle d'asservissement, ainsi que des moyens pour corriger le traitement de la boucle d'asservissement en fonction de cette erreur.

2. Dispositif selon la revendication 1, **caractérisé en ce que** les moyens pour déterminer l'erreur comportent des moyens de détermination d'un paramètre caractérisant l'effort théorique admissible à partir d'un modèle de référence.

3. Dispositif selon la revendication 2, **caractérisé en ce que**, un actionneur commandé par la boucle d'asservissement étant de type hydraulique, le modèle de référence est une fonction de transfert Force/Signal de commande de débit.

4. Dispositif selon l'une des revendications 2 ou 3, **caractérisé en ce que** les moyens de détermination comportent des moyens pour mettre en oeuvre une fonction de transfert ayant la même allure qu'une fonction de transfert de détermination du paramètre caractérisant l'effort réel, sauf au voisinage d'au moins une fréquence de résonance dudit effort.

5. Dispositif selon les revendications 3 et 4, **caractérisé en ce que** ladite fonction de transfert est

$$\frac{F_{ref}}{Q_{ref}} = \frac{ks}{\left(\frac{1}{2\pi f_0}\right)^2 s^2 + 2x\ \frac{\chi}{2\pi f_0}\ s + 1}\ B(s)$$

où s représente le laplacien et où f0 est égal à ou est au voisinage d'une fréquence de résonance, $\chi$ étant un facteur d'atténuation d'un ordre de grandeur entre 0,7 et 1, k étant un facteur de gain, B(s) étant une fonction de filtrage.

6. Dispositif selon la revendication 5, **caractérisé en ce que** la fonction B(s) est égale à 1.

7. Dispositif de servocommande de position, **caractérisé en ce qu'**il est constitué par un dispositif selon l'une des revendications précédentes.

8. Dispositif de servocommande d'effort, **caractérisé en ce qu'**il est constitué par un dispositif selon l'une des revendications 1 à 6.

9. Dispositif de servocommande hydraulique, **caractérisé en ce qu'**il est constitué par un dispositif selon l'une des revendications précédentes.

10. Dispositif de servocommande pour actionneur de commande de vol ou vérin de test, **caractérisé en ce qu'**il est constitué par un dispositif selon l'une des revendications précédentes.

**Patentansprüche**

1. Vorrichtung zur Servosteuerung, die wenigstens einen Regelkreis umfaßt, an dem als Eingangssignal ein Regelkontrollsignal anliegt und dessen Ausgang auf ein zu regelndes Element wirkt, wobei diese Vorrichtung Mittel zur Bestimmung eines Parameters, der die von der Regelung tatsächlich erzeugte Kraft kennzeichnet, umfaßt, **dadurch gekennzeichnet, daß** sie auch einen Regelkreis umfaßt, der folgendes einschließt: Mittel, um einen Fehler zu bestimmen, der die Differenz zwischen diesem Parameter, der die tatsächliche Kraft kennzeichnet, und einem Parameter, der eine zulässige theoretische Kraft kennzeichnet, die vom Regelkontrollsignal abhängt, charakterisiert, sowie Mittel zur Korrektur der Verarbeitung des Regelkreises in Abhängigkeit von diesem Fehler.

2. Vorrichtung nach Anspruch 1, **dadurch gekennzeichnet, daß** die Mittel zum Bestimmen des Fehlers Bestimmungsmittel für einen Parameter umfassen, der ausgehend von einem Referenzmodell die zulässige theoretische Kraft kennzeichnet.

**3.** Vorrichtung nach Anspruch 2, **dadurch gekennzeichnet, daß** ein vom Regelkreis gesteuertes Stellantrieb hydraulisch ist, wobei das Referenzmodell eine Kraft/Durchfluß-Steuersignal-Übertragungsfunktion ist.

**4.** Vorrichtung nach einem der Ansprüche 2 oder 3, **dadurch gekennzeichnet, daß** die Bestimmungsmittel Mittel umfassen, um eine Übertragungsfunktion einzusetzen, die dasselbe Verhalten hat, wie eine Übertragungsfunktion zur Bestimmung des Parameters, der die tatsächliche Kraft kennzeichnet, außer in der Umgebung wenigstens einer Resonanzfrequenz dieser Kraft.

**5.** Vorrichtung nach den Ansprüchen 3 und 4, **dadurch gekennzeichnet, daß** die Übertragungsfunktion die folgende ist

$$\frac{F_{ref}}{Q_{ref}} = \frac{ks}{\left(\frac{1}{2\pi f_0}\right)^2 s^2 + 2x \frac{\chi}{2\pi f_0} s + 1} B(s)$$

wobei s die Laplacevariable darstellt und $f_0$ gleich oder ungefähr gleich einer Resonanzfrequenz ist, $\chi$ ein Dämpfungsfaktor in der Größenordnung zwischen 0,7 und 1 ist, k ein Verstärkungsfaktor ist und B(s) eine Filterfunktion ist.

**6.** Vorrichtung nach Anspruch 5, **dadurch gekennzeichnet, daß** die Funktion B(s) gleich 1 ist.

**7.** Vorrichtung zur Positionsservosteuerung, **dadurch gekennzeichnet, daß** sie durch eine Vorrichtung gemäß einem der vorhergehenden Ansprüche gebildet wird.

**8.** Vorrichtung zur Kraftservosteuerung, **dadurch gekennzeichnet, daß** sie durch eine Vorrichtung gemäß einem der Ansprüche 1 bis 6 gebildet wird.

**9.** Vorrichtung zur hydraulischen Servosteuerung, **dadurch gekennzeichnet, daß** sie durch eine Vorrichtung gemäß einem der vorhergehenden Ansprüche gebildet wird.

**10.** Vorrichtung zur Servosteuerung eines Stellantriebs zur Flugsteuerung oder zur Steuerung eines Testzylinders, **dadurch gekennzeichnet, daß** sie durch eine Vorrichtung gemäß einem der vorhergehenden Ansprüche gebildet wird.

**Claims**

**1.** A servo-control device comprising at least one servo-control loop which receives a servo-control signal as input and whose output acts on an element to be servo-controlled, said device comprising means for determining a parameter characterizing the real force generated by the servo-control, the device being **characterized in that** it also includes a loop having means for determining an error characteristic of the difference between said parameter characterizing the real force and a parameter characterizing an acceptable theoretical force which is a function of the servo-control signal, and also means for correcting the processing of the servo-control loop as a function of said error.

**2.** A device according to claim 1, **characterized in that** the means for determining the error comprise determination means for determining a parameter characterizing the acceptable theoretical force on the basis of a reference model.

**3.** A device according to claim 2, **characterized in that** an actuator controlled by the servo-control loop is of the hydraulic type and the reference model is a force/signal transfer function for controlling flow rate.

**4.** A device according to claim 2 or claim 3, **characterized in that** the determination means comprise means for implementing a transfer function having the same appearance as a transfer function for determining the parameter characterizing the real force, except in the vicinity of at least one resonant frequency of said force.

**5.** A device according to claims 3 and 4, **characterized in that** said transfer function is:

$$\frac{F_{ref}}{Q_{ref}} = \frac{ks}{\left(\frac{1}{2\pi f_0}\right)^2 s^2 + 2x\frac{\chi}{2\pi f_0} s + 1} B(s)$$

where $s$ represents the Laplacian, and where f0 is equal to or close to a resonant frequency, $\chi$ being an attenuation factor having magnitude of about 0.7 to 1, $k$ being a gain factor, B(s) being a filter function.

**6.** A device according to claim 5, **characterized in that** the function B(s) is equal to 1.

**7.** A position servo-control device, **characterized in that** it is constituted by a device according to any preceding claim.

**8.** A force servo-control device, **characterized in that** it is constituted by a device according to any one of claims 1 to 6.

**9.** A hydraulic servo-control device, **characterized in that** it is constituted by the device according to any preceding claim.

**10.** A servo-control device for actuating a flight control or a test actuator, the device being **characterized in that** it is constituted by a device according to any preceding claim.

FIG_1

FIG_2

FIG_3a

FIG_3b

FIG_3c